# EUROPEAN PATENT APPLICATION

(11) **EP 4 723 310 A1**
(43) Date of publication of application: **08.04.2026**
(21) Application number: 23940598.8
(22) Date of filing: 05.06.2023
(51) Int. Cl.: H01M 10/6572, H01M 10/613, H01M 10/615, H01M 10/617, H01M 10/625, H01M 10/633, H01M 10/6552, H01M 10/6554, H01M 10/6556, H01M 10/6568

(54) **BATTERY COOLING/HEATING DEVICE**

(71) Applicant: TBK Co., Ltd., Machida-shi, Tokyo 194-0045 (JP)
(72) Inventor: TERADA, Yoshiyuki, Machida-shi Tokyo 194-0045 (JP); SUGAWARA, Masayuki, Machida-shi Tokyo 194-0045 (JP); YOSHITANI, Hirotada, Machida-shi Tokyo 194-0045 (JP)
(74) Representative: Fink Numrich Patentanwälte PartmbB
(86) International application number: PCT/JP2023/020867
(87) International publication number: WO 2024/252491

(57) **Abstract**

A battery cooling and heating device comprising: a battery (BT); a heat conduction member (2) connected to one end of the battery (BT) for heat exchange; a thermoelectric element (3) connected to the other end of the heat conduction member (2) for heat exchange with the heat conduction member (2); a temperature detector unit (T) for detecting the temperature of at least the battery (BT) and the heat conduction member (2); and a control unit (TCU) that switches at least an amount and polarity of an electric current flowing to the thermoelectric element (3) based on a detected temperature, wherein the thermoelectric element (3)configured to cool or heat the battery (BT) by forming a high-temperature heating surface and a lower-temperature cooling surface on the thermoelectric element (3) when current flows through it.

## Description

### TECHNICAL FIELD

This invention relates to a battery cooling and heating device.

### TECHNICAL BACKGROUND

With the growth of the electric vehicle market, improvements in battery performance are required. Electric vehicles are equipped with numerous battery modules to supply power to various electronic components such as drive motors, electric actuators, and sensors. Battery overheating affects not only battery lifespan and usable time but also vehicle safety. Furthermore, in cold climates, increased internal battery resistance can lead to performance degradation and, in some cases, damage. Therefore, it is necessary to manage the batteries so that they maintain an appropriate temperature, and to make an adjustment. As a system for cooling heated batteries, Patent Document 1 discloses an invention where vapor chambers are closely arranged adjacent to battery cells, and thermoelectric elements, such as Peltier devices, are closely arranged adjacent to the vapor chambers to provide heating or cooling.

### PRIOR ART DOCUMENTS

### PATENT DOCUMENTS

Patent Document 1: Registered Japanese Patent Publication No. 6704595

### SUMMARY OF THE INVENTION

### PROBLEM TO BE SOLVED BY THE INVENTION

However, the batteries installed in electric vehicles supply power to various operations and control devices. Since each battery is used under different operating conditions according to the demands of its respective power supply target, each battery experiences different levels of heat generation. Therefore, to efficiently make temperature adjustment to the batteries, it is necessary to implement appropriate temperature management for each individual battery. The present invention addresses this issue and aims to provide a battery cooling and heating device capable of individually performing temperature adjustment on multiple batteries, even when the cooling or heating requirements of each battery change.

### SOLUTIONS FOR SOLVING THE PROBLEM

To solve the above problem, the first invention comprising: a battery; a heat conduction member connected to one end of the battery for performing heat exchange; a thermoelectric element connected to the other end of the heat conduction member for performing heat exchange; a temperature detector unit configured to detect at least a temperature of the battery; and a control unit configured to switch an amount and polarity of an electric current flowing to at least the thermoelectric element according to a temperature detected by the temperature detector unit, wherein the thermoelectric element configured, when current flows through it, forming a heating surface with a higher temperature and a cooling surface with a lower temperature than the heating surface, thereby performing battery cooling and heating.

The above battery cooling and heating device may comprising: a plurality of the batteries; a plurality of the heat conduction members, each connected to one of the plurality of batteries; a plurality of the thermoelectric elements, each connected to one of the plurality of the heat conduction members; and a plurality of the temperature detector units, each configured to detect a temperature of at least one of the plurality of batteries, wherein the control unit is configured to control a cooling and heating of the plurality of batteries.

To solve the above problem, the second invention comprising: a battery; a heat conduction member connected to one end of the battery and capable of performing heat exchange; a thermoelectric element connected to the other end of the heat conduction member and performing heat exchange; a temperature detector unit configured to detect at least a temperature of the battery; a heat exchange unit connected to the thermoelectric element for heat exchange; a heat transfer medium, which is a fluid for transporting heat; a circulation flow path, wherein the heat transfer medium circulates and configured to enable heat exchange between the heat exchange unit and the heat transfer medium; a pumping device configured to pump the heat transfer medium through the circulation flow path; a heat supply device configured to heat or cool the heat transfer medium; and a control unit configured to control at least an amount of an electric current flowing to the thermoelectric element, a polarity of the electric current, the pumping device, and the heat supply device, based on a temperature detected by the temperature detector unit, wherein the control unit is configured to perform control to minimize a temperature difference generated between a surface where the thermoelectric element and the heat conduction member are connected and a surface where the heat exchange unit and the thermoelectric element are connected, while electric current flows through the thermoelectric element, thereby performing cooling or heating.

The above battery cooling and heating device may further comprising: a plurality of the batteries; heat conduction members connected to each of the plurality of batteries; a plurality of thermoelectric elements connected to the heat conduction members; a plurality of heat exchange units connected to the plurality of thermoelectric elements; a plurality of temperature detector units configured to detect temperatures of at least the plurality of batteries respectively; a plurality of branch flow paths configured to branch off in parallel from the circulation flow path and rejoining the circulation flow path; and a plurality of control valves configured to be capable of making adjustment to a flow rate of the heat transfer medium in each of the plurality of branch flow paths, wherein, in the plurality of branch flow paths, each of the plurality of heat exchange units and the heat transfer medium passing through the plurality of branch flow paths are configured to be able to perform heat exchange, and wherein the control unit is configured to control the plurality of control valves.

The above battery cooling and heating device may further comprising: wherein the heat supply device comprising: a cooling unit configured to cool the heat transfer medium; a heating unit configured to heat the heat transfer medium, a cooling flow path including the cooling unit that branches off from the circulation flow path and rejoins it; a heating flow path including the heating unit; and a switching control valve that switches either the cooling flow path or the heating flow path, wherein the control unit is configured to control the switching control valve.

### EFFECT OF THE INVENTION

In the above configuration of the battery cooling and heating device of the first invention, by controlling the electric current flowing to the thermoelectric element via the control unit, a heating surface and a cooling surface are generated on the thermoelectric element. Controlling this so that the surface connected to the heat conduction member becomes the heating surface allows the battery to be heated. Furthermore, by reversing the polarity of the electric current flowing to the thermoelectric element, the surface connected to the heat conduction member becomes the cooling surface, enabling battery cooling. Additionally, the temperature detector unit detects the temperatures of both the battery and the heat conduction member, allowing cooling or heating operations to be performed according to the detected temperatures.

In the above battery cooling and heating device, multiple batteries are provided, each connected to a heat conduction member and a thermoelectric element, and the device is configured so that it detects the temperature of each battery and the heat conduction member. This enables individual temperature management and adjustment for each battery.

In the battery cooling and heating device of the second invention, the battery can be heated or cooled by controlling the electric current flowing to the thermoelectric element via a control unit. Furthermore, a circulation flow path is configured to enable heat exchange between the thermoelectric element and the heat transfer medium heated or cooled by the heat supply device, so that the temperature difference generated at the surface where the heat conduction member connects to the thermoelectric element and at the surface where the thermoelectric element connects to the heat exchange unit is minimized while electric current flows through the thermoelectric element, . This creates a heating surface on the opposite side of the thermoelectric element during cooling operation, which is hotter than the surface where the thermoelectric element connects to the heat conduction member. Cooling this heating surface with the cooled heat transfer medium enhances the effectiveness of the cooling operation. Furthermore, when the thermoelectric element is performing a heating operation, a cooling surface with a lower temperature than the surface where the thermoelectric element connects to the heat conduction member forms on the opposite side. Heating this cooling surface with the heat transfer medium can enhance the effectiveness of the heating operation. Thus, the cooling or heating effect of the battery can be improved.

In the above battery cooling and heating device, comprises multiple batteries and multiple temperature detector units that detect the temperature of each battery and a plurality of heat conduction members. A control unit is configured to control thermoelectric elements based on the detected temperatures of each battery. This enables individual temperature management of the multiple batteries. Furthermore, by configuring the system such that each battery passes through a heat exchange unit in a branch flow path that diverges in parallel from the circulation flow path, enabling heat exchange with the heat transfer medium flowing through the branch flow path, the temperature difference generated by passing electric current through the thermoelectric element can be minimized, thereby enhancing the battery's cooling or heating effect.

In the above battery cooling and heating device, by configuring it to switch between a cooling flow path including a cooling unit and a heating flow path including a heating unit via a switching control valve, even when both a cooling unit and a heating unit are equipped, cooling or heating operations can be performed to minimize the temperature difference between the surface where the heat conduction member connects to the thermoelectric element and the surface where the thermoelectric element connects to the heat exchange unit, while electric current flows through the thermoelectric element. This enhances the battery cooling or heating effect.

### BRIEF DESCRIPTION OF THE DRAWINGS

FIG. 1 is a schematic diagram illustrating an example of the battery temperature adjustment system according to the present invention applied to an electric vehicle;
FIG. 2 is a schematic diagram illustrating the battery temperature adjustment system according to the first embodiment;
FIG. 3 is a block diagram illustrating the control of the battery temperature adjustment system according to the first embodiment;
FIG. 4 is a flowchart illustrating the control of the battery temperature adjustment system according to the first embodiment;
FIG. 5 is a configuration diagram showing the battery temperature adjustment system according to a second embodiment;
FIG. 6 is a block diagram illustrating the control of the battery temperature adjustment system according to the second embodiment;
FIG. 7 is a flowchart illustrating the control of the battery temperature adjustment system according to the second embodiment;
FIG. 8 is a schematic diagram illustrating the battery temperature adjustment system according to the third embodiment;
FIG. 9 is a block diagram illustrating the control of the battery temperature adjustment system according to the third embodiment;
FIG. 10 is a flowchart illustrating the control of the battery temperature adjustment system according to the third embodiment;
FIG. 11 is a configuration diagram showing the battery temperature adjustment system according to the fourth embodiment;
FIG. 12 is a block diagram illustrating the control of the battery temperature adjustment system according to the fourth embodiment;
FIG. 13 is a flowchart illustrating the control of the battery temperature adjustment system according to the fourth embodiment.

### DETAILED DESCRIPTION OF THE INVENTION

The embodiments of the present invention will now be described with reference to the drawings. However, the embodiments described below are merely examples of the present invention. Improvements or modifications may be made without departing from the scope of the present invention.

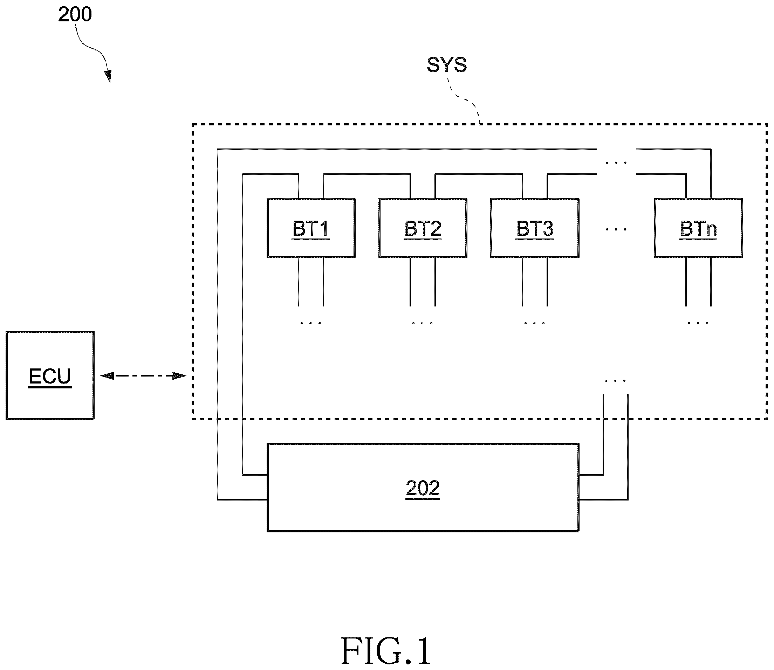

First, an electric vehicle 200 comprising a battery cooling and heating system SYS according to this embodiment is described based on the schematic diagram of FIG. 1. Note that FIG. 1 shows the main components of the electric vehicle 200 related to the battery cooling and heating system SYS and does not show all components of the electric vehicle 200.

An electric vehicle 200 comprises multiple batteries BT1 to BTn, a battery cooling and heating system SYS according to this embodiment for managing the temperature of batteries BT1 to BTn, a heat supply device 202, and an electronic control unit ECU. The electric vehicle 200 converts the electricity stored in multiple batteries BT1 to BTn (hereinafter collectively referred to as "battery BT") into alternating current and drives a drive motor (not shown in FIG.). It also uses voltage control to control the driving force of the drive motor. The electricity stored in battery BT is also used to drive other electric actuators and electronic devices. Battery BT is the target object for temperature adjustment by the battery cooling and heating device SYS according to this embodiment. Batteries have an optimal temperature range for operation depending on their type, within which stable operation is guaranteed. However, if the battery overheats beyond the upper limit of this temperature range, it leads to battery degradation. Furthermore, at temperatures below the lower limit, the speed of chemical reactions inside the battery decreases, resulting in reduced battery performance. For example, during rapid charging in cold regions, a battery at 30-50°C can recover to 30-40% of full charge in 30 minutes. While below 10°C, the charge amount decreases, and below 0°C, it drops significantly, recovering less than 10% in the same 30 minutes. Thus, charging capacity decreases as ambient temperature drops. Battery BT has an optimal temperature range for such operation. For the temperature adjustment performed by the control unit TCU described later, it is preferable to establish thresholds based on the upper and lower limits of this temperature range to determine whether to activate heating or cooling control.

The electronic control unit ECU communicates with various electronic devices installed in the electric vehicle 200. Through the collaboration of hardware and software, it controls the engine, transmission, brakes, and other electronic devices. The ECU communicates with the control unit TCU described later.

The heat supply device 202 is a device capable of temperature adjustment inside the electric vehicle 200. For example, it includes an electric fan, a radiator, and semiconductor ceramic heaters such as PTC (Positive Temperature Coefficient) heaters. The electric fan cools an object by rotating its fan electrically. A radiator is a device that circulates a fluid to be cooled internally, allowing heat exchange between the surrounding air and the fluid. The internal fluid is cooled by the wind during driving, thereby cooling the object. The PTC heater is a heating device made by blending highly conductive particles, such as semiconductor particles and carbon particles, to change electrical conductivity with temperature. These heat supply devices 202, capable of heating or cooling, are used in the battery cooling and heating device SYS of this embodiment as devices to heat or cool a heat transfer medium 10 described later.

The battery cooling and heating device SYS according to this embodiment is a device that performs temperature adjustment on battery BT by having the control unit TCU perform heating or cooling based on temperature information received from the temperature detector unit T. The following describes the battery cooling and heating devices SYS (1) to SYS (4) according to each embodiment, using configuration diagrams for each.

### (First Embodiment)

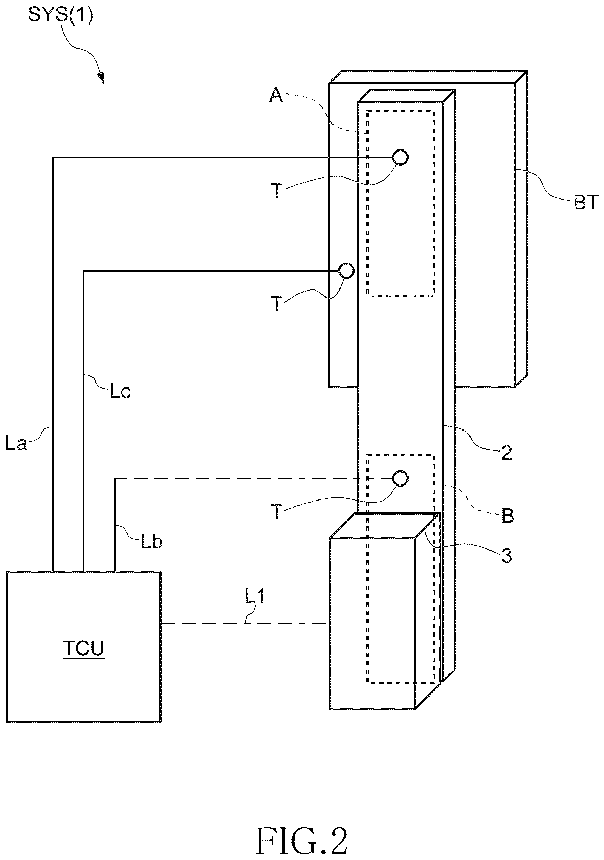

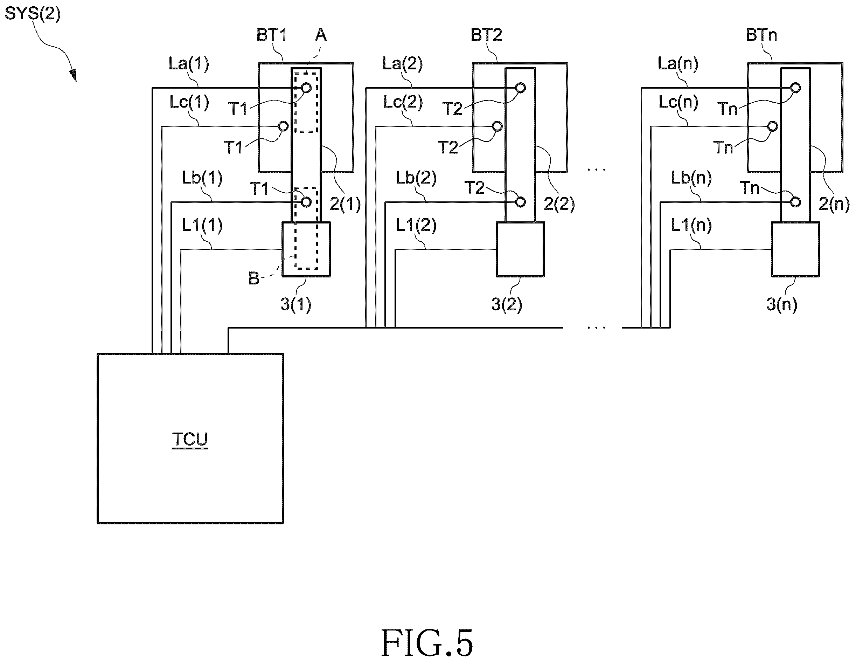

The battery cooling and heating system SYS (1) according to the first embodiment comprises a battery BT, a heat conduction member 2, a thermoelectric element 3, a temperature detector unit T, and a control unit TCU. FIG. 2 is a schematic configuration diagram illustrating the battery cooling and heating system SYS (1). In FIG. 2, the heat conduction member 2 is connected to the battery BT at one end A, and heat exchange between the heat conduction member 2 and the battery BT occurs at end A. Furthermore, a thermoelectric element 3 is connected to the other end B of the heat conduction member 2, and heat exchange occurs between the heat conduction member 2 and the thermoelectric element 3 at the other end B. Heat conduction occurs between the other end B and the one end A of the heat conduction member 2. The control unit TCU controls the thermoelectric element 3 according to the temperature detected by the temperature detector unit T. In FIG. 2, the approximate ranges of the end side A and the other end side B are each indicated by dashed lines. Furthermore, the approximate position detected by the temperature detector unit T is indicated by a circle symbol; this is also the case in FIGS. 5, 8, and 11, which are configuration diagrams for the second to fourth embodiments described later.

The heat conduction member 2 is a component possessing high thermal conductivity, enabling heat conduction between the end A and the other end B, which is separated from the end A, on the heat conduction member 2 without requiring power. Using a heat pipe as the heat conduction member 2 enables high-speed heat conduction. The heat conduction member 2 connects to the battery BT at the one end A to perform heat exchange and connects to the thermoelectric element 3 at the other end B to perform heat exchange.

The thermoelectric element 3 connects to the heat conduction member 2 at the other end B to perform heat exchange. The thermoelectric element 3 is a device composed of two different types of metal or semiconductor. It is configured such that, when electric current flows, a temperature difference occurs between the contact surface of the heat conduction member 2 and the opposite surface. Adjusting the amount of electric current flowing to the thermoelectric element 3 makes temperature adjustment. Reversing the direction of the electric current flowing to the thermoelectric element 3 inverts the temperature relationship between the contact surface of the heat conduction member 2 and its opposite side. Hereafter, the side with the higher temperature is referred to as the heating surface, and the side with the lower temperature is referred to as the cooling surface. When the contact surface of the heat conduction member 2 with the thermoelectric element 3 is the heating surface, its opposite side becomes the cooling surface. Conversely, when the contact surface of the heat conduction member 2 with the thermoelectric element 3 is the cooling surface due to a reversal of electric current polarity, its opposite side becomes the heating surface. In this way, the cooling and heating operations for the battery BT can be switched. This polarity reversal and electric current adjustment are controlled by the control unit TCU described later. For the thermoelectric element 3, a Peltier element, for example, can be used.

The temperature detector unit T detects the temperature of the battery BT. In addition to the battery BT's temperature, it also detects the temperatures near one end A and the other end B of the heat conduction member 2. This configuration enables detection of both the temperature of the heat conduction member 2 after heat exchange with the battery BT and the temperature of the heat conduction member 2 after heat exchange with the thermoelectric element 3, allowing for more precise temperature management. This applies similarly to subsequent embodiments, and redundant explanations are omitted. This enables accurate and high-speed control during temperature adjustment for battery BT. The temperature detector unit T may use a temperature sensor such as a thermistor. The temperature detected by the temperature detector unit T is transmitted to the control unit TCU via wired or wireless means.

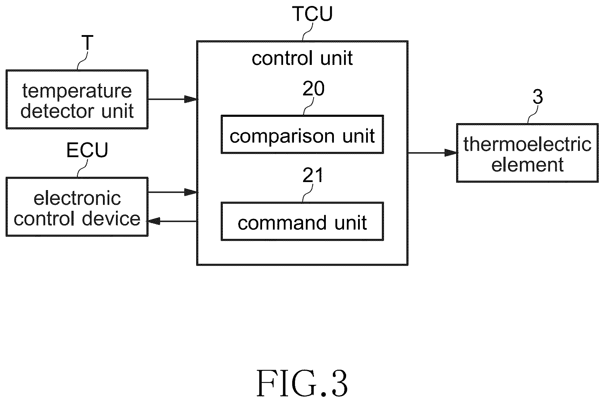

FIG. 3 is a block diagram illustrating the control performed by the control unit TCU. The control unit TCU controls the thermoelectric element 3 based on the temperature received from the temperature detector unit T. It controls the amount and polarity of the electric current supplied to the thermoelectric element 3.

It is also preferable that the control unit TCU be configured to perform bidirectional wired or wireless communication with the electronic control unit ECU of the electric vehicle 200. By communicating with each other, the control unit TCU and the electronic control unit ECU enable the ECU to receive information such as battery temperature and utilize it for other control functions. Furthermore, it can receive information from the electronic control unit ECU and utilize it for control by the control unit TCU. For communication between the control unit TCU and the electronic control unit ECU, wired communication such as CAN (Controller Area Network) communication can be used. This is also the case in the second to fourth embodiments.

The control unit TCU also includes a comparison unit 20 and a command unit 21. The comparison unit 20 determines control based on the temperature detected by the temperature detector unit T. The comparison unit 20 has a cooling threshold temperature Ta, which determines to initiate cooling operation to resolve overheating of battery BT when the temperature exceeds the optimal operating range for battery BT, and a heating threshold temperature Tb, which determines to initiate heating operation to resolve excessive cooling. These cooling threshold temperature Ta and heating threshold temperature Tb are values determined based on the upper and lower limits of the optimal temperature range for driving battery BT. Command unit 21 transmits control signals to each control mechanism via signal line L1 according to the comparison results from comparison unit 20. Signal line La is a signal line for receiving temperature from the temperature detector unit T at one end A. Signal line Lb is a signal line for receiving temperature from the temperature detector unit T at the other end B. Signal line Lc is a signal line for receiving temperature from the temperature detector unit T in battery BT. Signal line L1 is a signal line for transmitting control signals to the thermoelectric element.

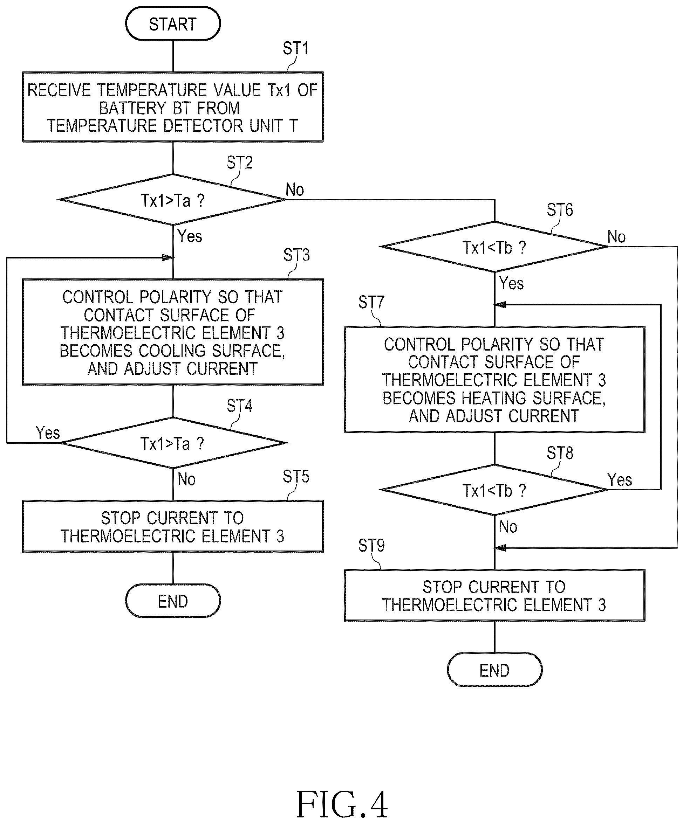

The control within the control unit TCU is explained using the flowchart in FIG. 4.

First, the cooling operation is explained using FIG. 4. The control unit TCU receives information Tx1 about the temperature of the battery BT from the temperature detector unit T (Step ST1). It then compares this with the cooling threshold temperature Ta (Step ST2). If Tx1 > Ta is determined, it controls the polarity of the thermoelectric element 3 so that the contact surface between the heat conduction member 2 and the thermoelectric element 3 becomes the cooling surface, thereby performing adjustment on the electric current (Step ST3). It then detects the battery BT temperature Tx1, the temperature Ty1 near one end A of the heat conduction member 2, and the temperature Tz1 near the other end B, while comparing Tx1 with Ta (Step ST4). Steps ST3 and ST4 are repeated. Eventually, when temperature Tx1 falls below Ta, and Tb < Tx1 < Ta, the electric current to the thermoelectric element 3 is stopped, terminating the cooling operation (Step ST5). Note that the temperature at which the cooling operation stops is determined by design. Tx1 = Ta is also acceptable.

Next, the heating operation is explained using FIG. 4. Upon receiving temperature Tx1 information from temperature detector unit T (Step ST1), the comparison unit 20 compares it with the heating threshold temperature Tb (Step ST6). If Tx1 < Tb is determined, the polarity is controlled so that the contact surface between heat conduction member 2 and thermoelectric element 3 becomes the heating surface, and electric current is applied. (Step ST7). Then, while detecting the battery BT's temperature Tx1, the temperature Ty1 near one end A of the heat conduction member 2, and the temperature Tz1 near the other end B, the comparison unit 20 compares Tx1 with Tb (Step ST8). Step ST7 and Step ST8 are repeated. Eventually, when temperature Tx1 exceeds Tb and the relationship Tb < Tx1 < Ta is satisfied, the electric current to the thermoelectric element 3 is stopped, terminating the heating operation (Step ST9).

Through the above steps, the temperature of battery BT can be managed.

### (Second Embodiment)

The battery cooling and heating device SYS (2) according to the second embodiment is an embodiment for cases where multiple batteries BT are present, as in the first embodiment, and is explained using the configuration diagram in FIG. 5. The battery cooling and heating device SYS (2) according to the second embodiment comprises: a plurality of batteries BT1 to BTn; a plurality of heat conduction members 2 (1) to 2 (n); a plurality of thermoelectric elements 3 (1) to 3 (n); a plurality of temperature detector units T1 to Tn; and a control unit TCU. FIG. 5 uses the same symbols for components with the same functions as in FIG. 2, and redundant explanations are omitted. In FIG. 5, each battery BT1 to BTn is connected to a heat conduction member 2 at one end A, and is connected to heat conduction members 2 (1) to 2 (n) and thermoelectric elements 3 (1) to 3 (n) at the other end B. Note that heat conduction members 2 (1) to 2 (n) are not limited to being installed one per battery BT, provided that heat conduction occurs uniformly across the same battery BT. A plurality of heat conduction members 2 may be used for heat exchange per battery BT. In such cases, the thermoelectric elements 3 are configured to contact these multiple heat conduction members 2.

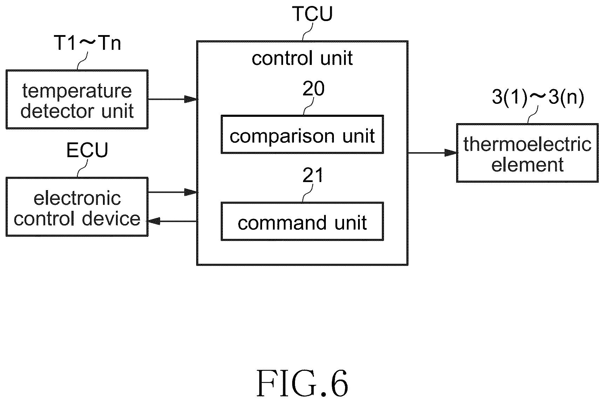

FIG. 6 is a block diagram illustrating control within the control unit TCU. The control unit TCU controls the thermoelectric element 3 based on temperatures received from the temperature detector units T1 to Tn. It controls the amount and polarity of the electric current applied to the thermoelectric element 3.

The control unit TCU, the same as in the first embodiment, includes a comparison unit 20 and a command unit 21. It detects the temperatures of the battery BT1 to BTn, the vicinity of one end A of the heat conduction member 2, and the vicinity of the other end B, respectively, using the temperature detector units T1 to Tn. compares these temperatures with the cooling threshold temperature Ta and the heating threshold temperature Tb, as in the first embodiment, and controls each thermoelectric element 3 (1) to 3 (n) based on the comparison results. The control unit TCU receives temperatures from the temperature detector units T and transmits control signals to each control mechanism using signal lines La (1) to La (n), Lb (1) to Lb (n), Lc (1) to Lc (n), and L1 (1) to L1 (n). Signal lines La (1) to La (n) are signal lines for receiving temperatures from temperature detector units T1 to Tn at one end A, signal lines Lb (1) to Lb (n) are signal lines for receiving temperatures from temperature detector units T1 to Tn at the other end B, and signal lines Lc (1) to Lc (n) are signal lines for receiving temperatures from temperature detector units T1 to Tn at the battery BT. Furthermore, signal lines L1 (1) to L1 (n) are signal lines for transmitting control signals to thermoelectric elements 3 (1) to 3 (n).

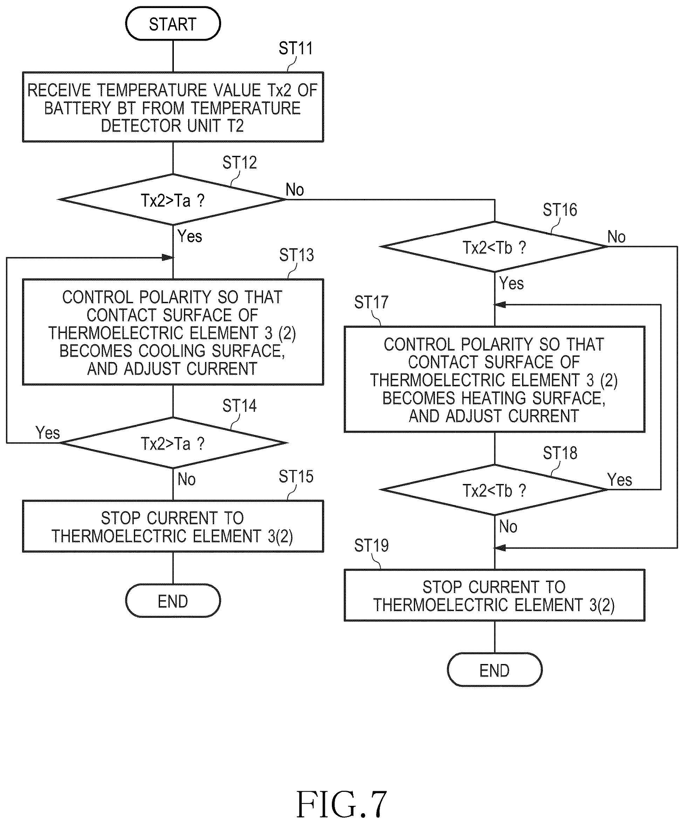

The control within the control unit TCU is explained using the flowchart in FIG. 7.

First, the cooling operation is explained using FIG. 7. As an example, the control when the temperature Tx2 detected by temperature detector unit T2 exceeds the cooling threshold temperature Ta in battery BT2 is described. The control unit TCU receives information Tx2 about the temperature of battery BT2 from temperature detector unit T2 (step ST11), compares it with the cooling threshold temperature Ta in the comparison unit 20 (step ST12), and if it determines Tx2 > Ta, it controls the polarity of thermoelectric element 3(2) so that the contact surface between heat conduction member 2(2) and thermoelectric element 3(2) becomes the cooling surface, thereby performing current adjustment (Step ST13). Then, while detecting the temperature Tx2 of battery BT2, the temperature Ty2 near one end A of the heat conduction member 2(2), and the temperature Tz2 near the other end B, it compares Tx2 with Ta (Step ST14). Steps ST13 and ST14 are repeated. Eventually, when temperature Tx2 falls below Ta, and Tb < Tx2 < Ta, the electric current to thermoelectric element 3(2) is stopped, terminating the cooling operation (Step ST15).

Next, the heating operation is explained using FIG. 7. When information about the temperature Tx2 of battery BT is received from temperature detector unit T2 (Step ST11), it is compared with the heating threshold temperature Tb (Step ST16). and if Tx2 < Tb is determined, the polarity is controlled so that the contact surface between the heat conduction member 2 (2) and the thermoelectric element 3 (2) becomes the heating surface, and the current is adjusted (Step ST17). Then, while detecting the temperature Tx2 of battery BT2, the temperature Ty2 near one end A of the heat conduction member 2 (2), and the temperature Tz2 near the other end B, it compares Tx2 with Tb (Step ST18). Steps ST17 and ST18 are repeated. Eventually, when temperature Tx2 exceeds Tb and Tb < Tx2 < Ta, the electric current to thermoelectric element 3 (2) is stopped, terminating the heating operation (Step ST19).

Through the above steps, the temperature of batteries BT1 to BTn can be managed.

### (Third Embodiment)

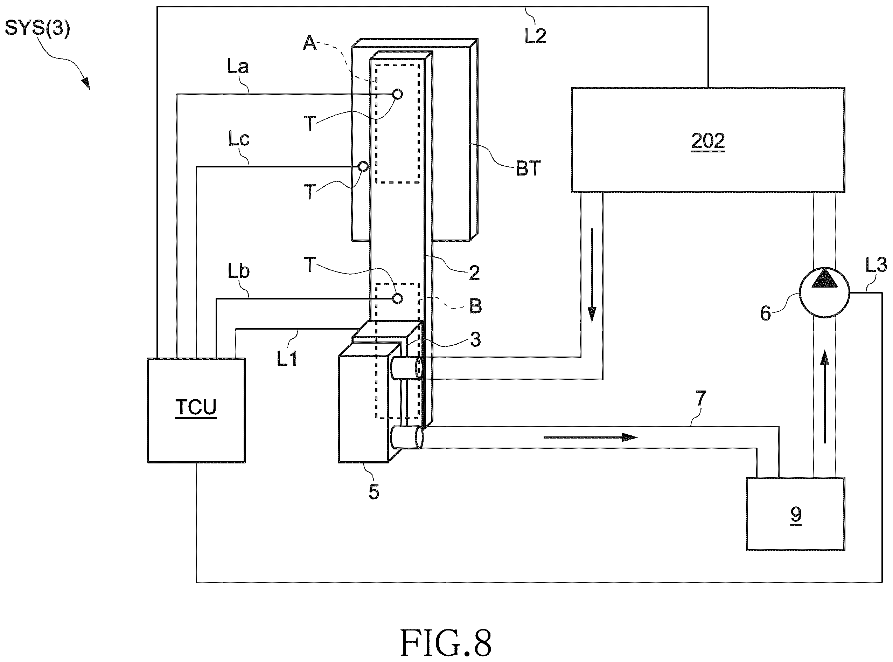

The battery cooling and heating device SYS (3) according to the third embodiment is a variation of the first embodiment. The battery cooling and heating device SYS (3) according to the third embodiment is described using the configuration diagram of FIG. 8. In FIG. 8, the same symbols are used for components having the same functions as in FIG. 2, and redundant descriptions are omitted. Arrows indicate the flow direction of the heat transfer medium 10.

The battery cooling and heating device SYS (3) comprises a battery BT, a heat conduction member 2, a thermoelectric element 3, a heat exchange unit 5, a temperature detector unit T, a pumping device 6, a circulation flow path 7 through which the heat transfer medium 10 flows, a heat supply device 202, and a storage unit 9. In FIG. 8, the heat conduction member 2 is connected to the battery BT at one end A, and the thermoelectric element 3 is connected at the other end B. Furthermore, the heat exchange unit 5 is connected to the surface opposite the contact surface where the thermoelectric element 3 contacts the heat conduction member 2. The temperature of the surface opposite the thermoelectric element 3 is subject to temperature adjustment by the heat transfer medium 10 (not shown in FIG.) flowing through the circulation flow path 7 passing through the heat exchange unit 5. The temperature detector unit T detects the temperatures of the battery BT and the vicinity of the one end A and the other end B of the heat conduction member 2.

The heat conduction member 2 is a component possessing high thermal conductivity, enabling heat conduction between the end portion A and the other end portion B separated from the end portion A on the heat conduction member 2 without requiring power. Using a heat pipe as the heat conduction member 2 enables high-speed heat conduction. The heat conduction member 2 connects to the battery BT at the end side A to perform heat exchange and connects to the thermoelectric element 3 at the other end side B to perform heat exchange.

The battery cooling and heating device SYS (3) according to the third embodiment is a variation of the first embodiment. The battery cooling and heating device SYS (3) according to the third embodiment is described using the configuration diagram of FIG. 8. In FIG. 8, the same symbols are used for components having the same functions as in FIG. 2, and redundant descriptions are omitted. Arrows indicate the flow direction of the heat transfer medium 10.

As described above, the temperature detector unit T detects the temperature of the battery BT. In addition to the battery BT temperature, it also detects the temperatures near one end A and the other end B of the heat conduction member 2. The temperatures detected by the temperature detector unit T are transmitted to the control unit TCU via wired or wireless means. The temperature detector unit T may also be configured to detect the temperature of the back surface of the thermoelectric element 3, which is the surface opposite the one connected to the heat conduction member 2. This configuration facilitates the determination to initiate control aimed at reducing the temperature difference between the back surface and the surface connected to the heat conduction member 2.

The heat transfer medium10 is a fluid that is heated or cooled by performing heat exchange in the heat supply device 202 and transfers its heat by its own movement. For such a heat transfer medium 10, an LLC (Long Life Coolant) can be used for cooling purposes. Furthermore, when used for both cooling and heating, it is desirable that the fluid be suitable for either purpose. It is also desirable that the fluid be non-corrosive to the materials constituting the flow path. The heat transfer medium 10 circulates through a circulation flow path 7.

The circulation flow path 7 is the passageway through which the heat transfer medium 10 flows. The circulation flow path 7 is a flow path circulating from the heat supply device 202 through the heat exchange unit 5, and includes a storage unit 9 along its route. The circulation flow path 7 is configured such that the heat transfer medium 10, heated or cooled in the heat supply device 202, exchanges heat in the heat exchange unit 5. During heating operation, the heat transfer mediu, 10 is heated in the heat supply device 202, carries that heat to the heat exchange unit 5, and transfers heat to the surface behind the surface where the thermoelectric element 3 and the heat conduction member 2 contact each other within the heat exchange unit 5. During cooling operation, the heat transfer medium 10 is cooled in the heat supply device 202 and removes heat from the aforementioned surface behind the contact surface within the heat exchange unit 5.

The heat exchange unit 5 is installed in contact with the back surface of the contact surface where the thermoelectric element 3 and the heat conduction member 2 are connected. As the heat transfer medium 10 passes through the heat exchange unit 5, heat exchange occurs between the heat transfer medium 10 and the back surface. As described in the first embodiment, the thermoelectric element 3 is configured such that a temperature difference occurs between the surface where the thermoelectric element 3 and the heat conduction member 2 are in contact while electric current flows (hereinafter referred to as the "contact surface") and the surface on the opposite side of that contact surface (hereinafter referred to as the "non-contact surface"). When the contact surface is the cooling surface due to the cooling operation, the non-contact surface becomes the heating surface with a higher temperature than the cooling surface. Cooling the non-contact surface by the heat exchange unit 5, similar to the contact surface, enables more efficient cooling of the battery BT. Furthermore, when the contact surface is a heating surface due to a heating operation, heating the non-contact surface by the heat exchange unit 5 enables more efficient heating of the battery BT.

The pumping device 6 pumps the heat transfer medium 10 within the circulation flow path 7, forming a flow in a specific direction. The pumping device 6 can vary the pressure during pressurization and the delivery speed of the heat transfer medium 10, and is controlled by the control unit TCU. Its installation position can be changed as appropriate. An electric water pump can be used as the pumping device 6.

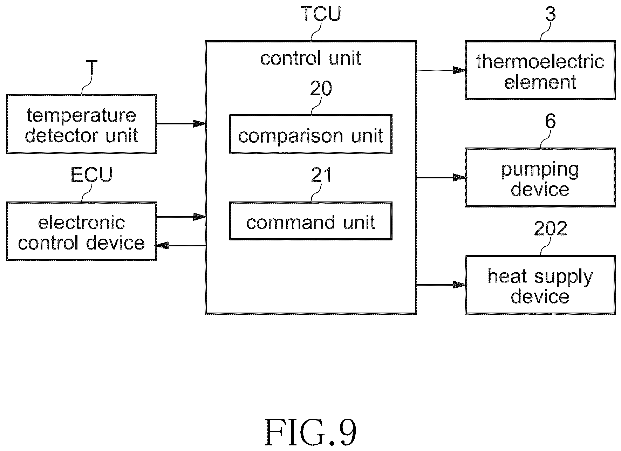

FIG. 9 is a block diagram illustrating control within the control unit TCU. The control unit TCU controls the thermoelectric element 3, the heat supply device 202, and the pumping device 6 based on the temperature received from the temperature detector unit T. For the thermoelectric element 3, it controls the amount of current and the polarity of the current.

It is also preferable that the control unit TCU be configured to perform bidirectional wired or wireless communication with the electronic control unit ECU of the electric vehicle 200.

The control unit TCU also includes a comparison unit 20 and a command unit 21. The control unit TCU controls the system based on the comparison results obtained by the comparison unit 20 comparing the temperature detected by the temperature detector unit T. The comparison unit 20 compares the temperature detected by the temperature detector unit T with predetermined cooling threshold temperature Ta and heating threshold temperature Tb, based on the optimal temperature range for driving the battery BT, to determine whether the temperature is within this optimal range. Furthermore, since the thermoelectric element 3 heats or cools the non-contact surface with the heat conduction member 2 as needed, the control unit TCU is configured to control the pumping device 6 and the heat supply device 202. In this case, as described above, this non-contact surface may be detected by the temperature detector unit T. If the heat exchange unit 5 is controllable, it may also be controlled. The command unit 21 transmits control signals to control each mechanism via signal lines L1 to L3 based on the comparison result from the comparison unit 20. Signal line La is for receiving the temperature from the temperature detector unit T at the one end A, signal line Lb is for receiving the temperature from the temperature detector unit T at the other end B, and signal line Lc is for receiving the temperature from the temperature detector unit T at the battery BT. Signal line L1 transmits control signals to thermoelectric element 3, signal line L2 transmits control signals to heat supply device 202, and signal line L3 transmits control signals to pumping device 6.

Heat supply device 202 is installed in circulation flow path 7 such that it can exchange heat with heat transfer medium 10 heating or cooling heat transfer medium 10.

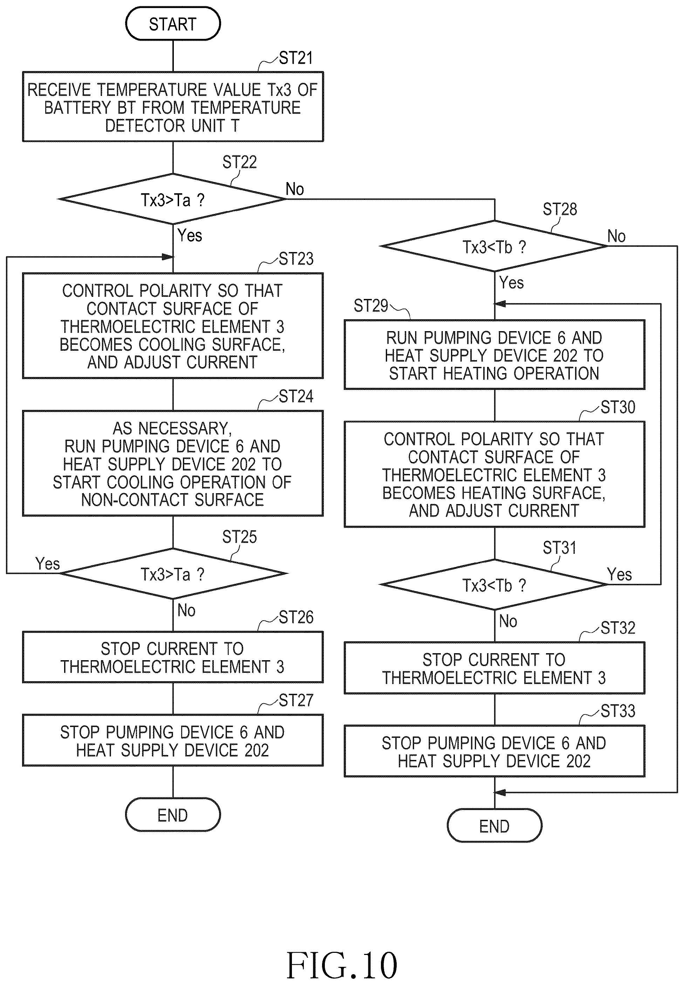

The control within the control unit TCU is explained using the flowchart in FIG. 10.

First, the cooling operation is explained. The control unit TCU receives information Tx3 about the temperature of the battery BT from the temperature detector unit T (step ST21). It then compares this with the cooling threshold temperature Ta in the comparison unit 20 (step ST22). and if it determines that Tx3 > Ta, it activates the pumping device 6 and runs the heat supply device 202 to cool the heat transfer medium 10, thereby cooling the non-contact surface of the thermoelectric element 3 at the heat exchange unit 5 (Step ST23). It also controls the polarity of the thermoelectric element 3 so that its contact surface becomes the cooling surface, and performs adjustment on the electric current (Step ST24). Then, while detecting the temperature Tx3 of battery BT, the temperature Ty3 near one end A of heat conduction member 2, and the temperature Tz3 near the other end B, the comparison unit 20 compares Tx3 and Ta (Step ST25). Steps ST23 to ST25 are repeated. Eventually, when temperature Tx3 falls below Ta, such that Tb < Tx3 < Ta, the electric current to the thermoelectric element 3 is stopped (Step ST26), and the operation of the pumping device 6 and the heat supply device 202 is stopped (Step ST27). Note that the cooling operation of the non-contact surface in step ST24 may be performed as needed. In such cases, a temperature detector unit T may be provided for the non-contact surface, and step ST24 may be executed based on the obtained temperature.

Next, the heating operation is described. When information on the temperature Tx3 of battery BT is received from temperature detector unit T (step ST21), it is compared with heating threshold temperature Tb in comparison unit 20 (step ST28). and if Tx3 < Tb is determined, the pumping device 6 is activated, the heat supply device 202 is run to heat the heat transfer medium 10, and the non-contact surface of the thermoelectric element 3 is heated at the heat exchange unit 5 (Step ST29). Furthermore, the polarity is controlled and current is adjusted so that the contact surface between the heat conduction member 2 and the thermoelectric element 3 becomes the heating surface (Step ST30). Furthermore, while detecting the temperature Tx3 of battery BT, the temperature Ty3 near one end A of heat conduction member 2, and the temperature Tz3 near the other end B, the comparison unit 20 compares Tx3 with Tb (Step ST31). Steps ST29 to ST31 are repeated. Eventually, when temperature Tx3 exceeds Tb and Tb < Tx3 < Ta, the electric current to the thermoelectric element 3 is stopped (Step ST32), and the pumping device 6 is stopped to halt the heat supply device (Step ST33). Note that the heating operation of the non-contact surface in step ST24 may be performed as needed, similar to the cooling operation.

Through the above steps, the temperature of battery BT can be managed.

### (Fourth Embodiment)

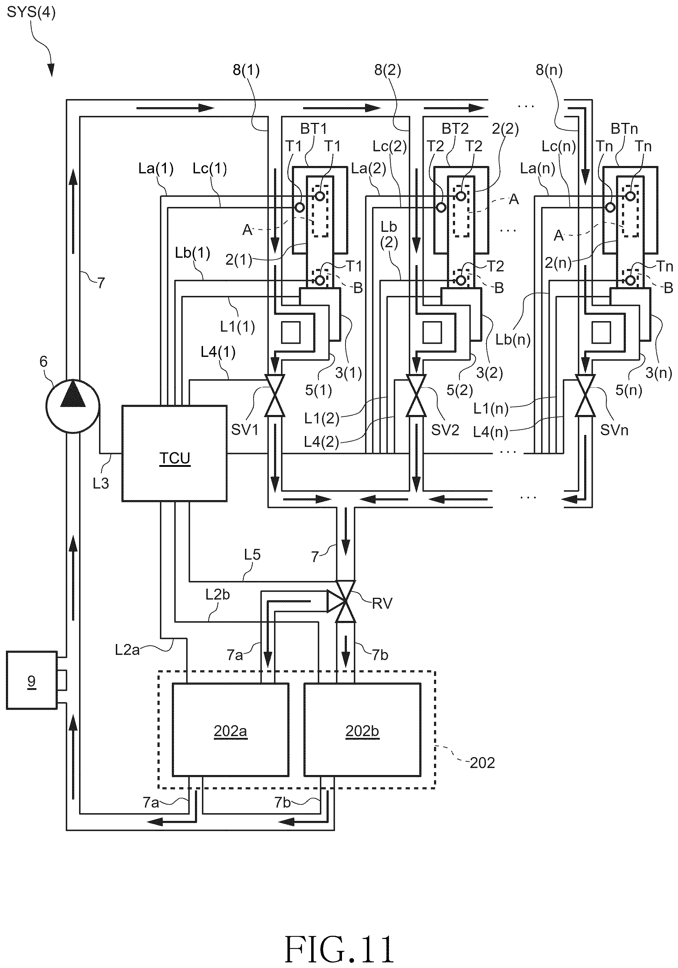

The battery cooling and heating device SYS (4) of the fourth embodiment is a modified embodiment for cases where multiple batteries BT are included, as in the third embodiment, and is explained using the configuration diagram in FIG. 11. In FIG. 11, the area enclosed by dashed lines indicates the range indicated by the lead lines. The battery cooling and heating device SYS (4) of the fourth embodiment comprises multiple batteries BT1 to BTn, a plurality of heat conduction members 2 (1) to 2 (n), a plurality of thermoelectric elements 3 (1) to 3 (n), a plurality of heat exchange units 5 (1) to 5 (n), temperature detector units T1 to Tn, a circulation flow path 7, branch flow paths 8 (1) to 8 (n) branching from the circulation flow path 7, a heat supply device 202, a cooling flow path 7a branching from the circulation flow path 7 and passing through a cooling unit 202a, a heating flow path 7b branching from the circulation flow path 7 and passing through a heating unit 202b, a plurality of control valves SV1 to SVn, a rotary control valve RV, a pumping device 6, a control unit TCU, and a storage unit 9. The heat supply device 202 includes a cooling unit 202a and a heating unit 202b. FIG. 11 uses the same symbols for components having the same function as in FIG. 8, and redundant descriptions are omitted.

In this embodiment, the flow path through which the heat transfer medium 10 passes branches off from the circulation flow path 7 into branch flow paths 8 (1) to 8 (n), then rejoins the circulation flow path 7. It is then branched by the rotary control valve RV into a cooling flow path 7a passing through the cooling unit 202a or a heating flow path 7b passing through the heating unit 202b, and circulates again after rejoining the circulation flow path 7.

In FIG. 11, batteries BT1 to BTn are connected to the heat conduction member 2 at one end A, and connected to the thermoelectric element 3 at the other end B. Furthermore, the heat conduction member 2 is not limited to being installed one per battery BT, provided that heat conduction occurs uniformly across the same battery BT. Multiple heat conduction members 2 may be used for heat exchange per battery BT. In such a case, the thermoelectric element 3 is configured to contact the plurality of heat conduction members 2. The temperature detector unit T detects the temperatures of each battery BT, as well as the vicinity of the one end A and the vicinity of the other end B of the heat conduction member 2. The heat exchange unit 5 is connected to the surface opposite the surface where the thermoelectric element 3 contacts the heat conduction member 2. Furthermore, it includes a circulation flow path 7 through which a heat transfer medium 10 (not shown in FIG.) circulates, branch flow paths 8 (1) to 8 (n) that branch off in parallel from the circulation flow path 7 and rejoin it, a pumping device 6 that forms a flow in a specific direction on the circulation flow path 7, a storage unit 9, and the aforementioned heat supply device 202. A battery BT, a heat conduction member 2, a thermoelectric element 3, and a heat exchange unit 5 are each installed so that the heat transfer medium 10 flowing through the branch flow paths 8 (1) to 8 (n) can exchange heat with the heat exchange unit 5. Furthermore, control valves SV1 to SVn are installed in each of the branch flow paths 8 (1) to 8 (n) for heat transfer medium adjustment. Note that the heat conduction member 2 (1) to 2 (n), thermoelectric element 3 (1) to 3 (n), temperature detector unit T1 to Tn, and heat exchange unit 5 (1) to 5 (n) connected to each battery BT1 to BTn are denoted as such. For example, the heat conduction member and thermoelectric element connected to the second battery BT2 are denoted as the temperature detector unit are denoted as heat conduction member 2 (2), thermoelectric element 3 (2), temperature detector unit T2, and heat exchange unit 5 (2), respectively.

Control valves SV1 to SVn are installed one each in a plurality of branch flow paths 8 (1) to 8 (n). Control valves SV1 to SVn (hereinafter also referred to as SV) can perform flow rate adjustment from upstream to downstream, and flow path opening/closing by moving the valve body. Control of the valve body of control valve SV is performed by control unit TCU. A solenoid valve (electromagnetic valve) can be used as such a control valve SV.

The heat supply device 202 includes a cooling unit 202a for cooling the heat transfer medium 10 and a heating unit 202b for heating it. The cooling flow path 7a passing through the cooling unit 202a and the heating flow path 7b passing through the heating unit 202b are configured to be switchable by the switching control valve RV. This allows the heat transfer medium 10, to be heat-exchangeable in both the cooling unit 202a and the heating unit 202b, branching off from the circulation flow path 7 and then rejoining the circulation flow path 7.

The switching control valve RV is a control valve capable of switching between a plurality of flow paths via a valve body. It switches between the cooling flow path 7a passing through the cooling unit 202a and the heating flow path 7b passing through the heating unit 202b. This switching is controlled by the control unit TCU. As the switching control valve RV, a rotary valve, whose rotor (valve body) rotation can be externally controlled, can be used.

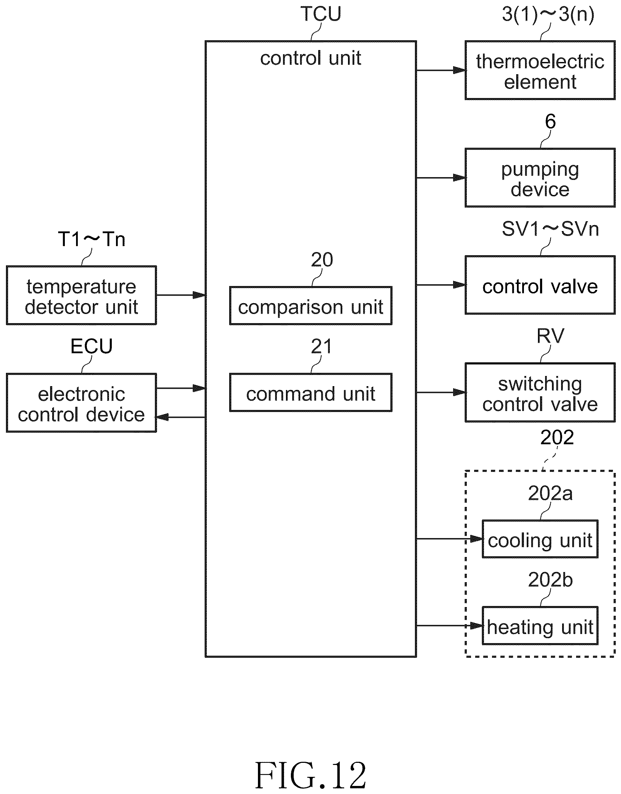

Figure 12 is a block diagram illustrating the control performed by the control unit TCU. The control unit TCU controls the thermoelectric element 3, the pumping device 6, the control valves SV1 to SVn, the switching control valve RV, and the heat supply device 202 based on temperatures received from the temperature detector units T1 to Tn. For the thermoelectric element 3, it controls the amount and polarity of the current.

It is also preferable that the control unit TCU be configured to perform bidirectional wired or wireless communication with the electronic control unit ECU of the electric vehicle 200.

The control unit TCU includes a comparison unit 20 and a command unit 21. The control unit TCU controls the system based on the comparison result obtained by the comparison unit 20 comparing the temperature detected by the temperature detector unit T. The comparison unit 20 compares the temperature detected by the temperature detector unit T with a cooling threshold temperature Ta and a heating threshold temperature Tb, which are predetermined based on the optimal temperature range for driving the battery BT, to determine whether the temperature is within this optimal range. Furthermore, since the thermoelectric element 3 heats or cools the non-contact surface with the heat conduction member 2 as needed, the control unit TCU is configured to control the pumping device 6 and the heat supply device 202. In such cases, as described above, this non-contact surface may be detected by the temperature detector unit T. If the heat exchange unit 5 is controllable, it may also be controlled. The command unit 21 transmits control signals via signal lines L1 (1) to L1 (n), L2a, L2b, L3, L4 (1) to L4 (n), and L5 to control each mechanism according to the comparison result from the comparison unit 20. Signal lines L1 (1) to L1 (n) are signal lines for receiving temperatures from temperature detector units T1 to Tn at one end A. Signal lines L2a and L2b are signal lines for receiving temperatures from temperature detector units T1 to Tn at the other end B. Signal lines L3 and L4 (1) to L4 (n) are signal lines for receiving temperatures from temperature detector units T1 to Tn at the other end B. Signal lines L1 (1) to L1 (n) are signal lines for transmitting control signals to thermoelectric elements. Signal lines L2a are for the cooling unit 202a, signal lines L2b are for the heating unit 202b, L3 is for the pumping device 6, L4 (1) to L4 (n) are for control valves SV1 to SVn, and signal line L5 is for transmitting control signals to the switching control valve RV.

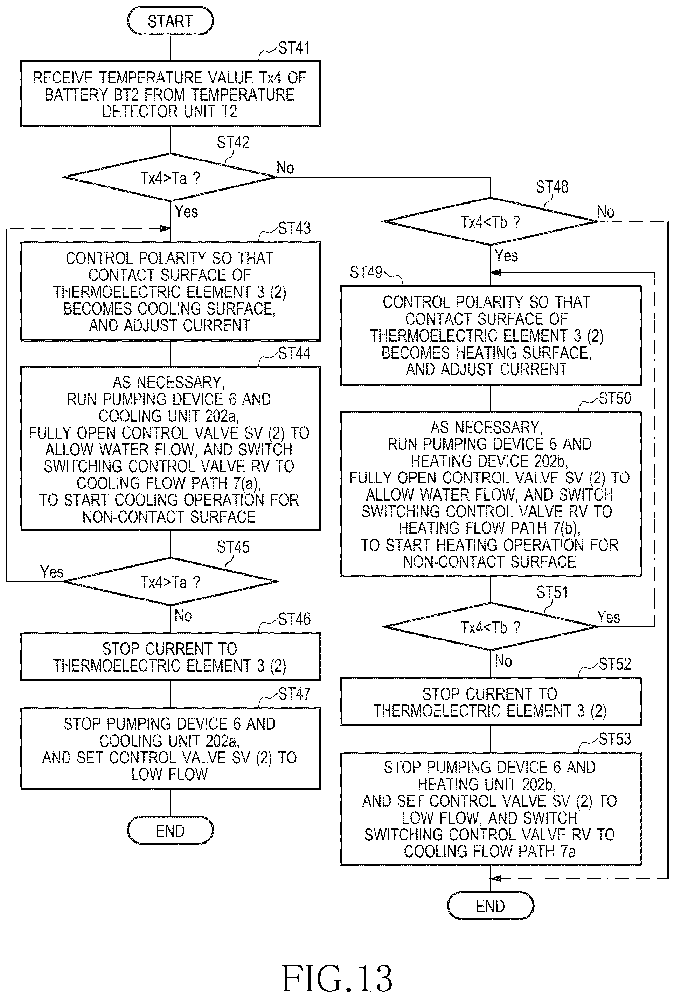

The control within the control unit TCU is explained using the flowchart in FIG. 13.

First, the cooling operation will be explained using FIG. 13. As an example, the control when temperature Tx4 exceeding the cooling threshold temperature Ta is detected by temperature detector unit T2 in battery BT2 will be described. During normal operation, the pumping device 6 operates at low speed or may be stopped depending on temperature. Control valves SV1 to SVn are controlled to allow low-volume water flow. Water is supplied to the cooling unit 7a via the rotary control valve RV, and the heat transfer medium 10 circulates through the cooling unit 202a.

When the control unit TCU receives information about the temperature Tx4 of battery BT2 from the temperature detector unit T2 (step ST41), compares it with the cooling threshold temperature Ta (ST42). If Tx4 > Ta is determined, it controls the polarity of the thermoelectric element 3 (2) so that the contact surface between the heat conduction member 2 (2) and the thermoelectric element 3 (2) becomes the cooling surface, and performs current adjustment (Step ST43). Additionally, the pumping device 6 is operated at high speed, the control valve SV2 is fully opened to allow water flow, and the switching control valve RV is switched to the cooling flow path 7a to control the flow through the cooling unit 202a. Then, while performing heat exchange with the radiator as the cooling unit 202a, the electric fan is run to cool the heat transfer medium 10, thereby cooling the non-contact surface of the thermoelectric element 3 (2) at the heat exchange unit 5 (2) (Step ST44). Then, while detecting the temperature Tx4 of battery BT2, the temperature Ty4 near one end A of heat conduction member 2 (2), and the temperature Tz4 near the other end B, a comparison is made between Tx4 and Ta (Step ST45). Steps ST43 to ST45 are repeated. Eventually, when temperature Tx4 falls below Ta, such that Tb < Tx4 < Ta, the electric current to thermoelectric element 3 (2) is stopped (Step ST46), controls control valve SV2 to allow water flow at a low rate, slows down or stops the pumping device 6, and stops the electric fan serving as cooling unit 202a (Step ST47). Note that the cooling operation of the non-contact surface in Step ST44 may be performed as needed. In this case, a temperature detector unit T may be provided for the non-contact surface, and execution of step ST44 may be determined based on the obtained temperature.

Next, the heating operation is described using FIG. 13. For heating, as an example, the control when a temperature Tx4 below the heating threshold temperature Tb is detected by temperature detector unit T2 in battery BT2 is described. During normal operation, the pumping device 6 operates at low speed or may be stopped depending on the temperature. The control valves SV1 to SVn are adjusted to allow low-volume water flow. Water is supplied to the cooling flow path 7a via the switching control valve RV, circulating the heat transfer medium 10 through a radiator or similar component functioning as the cooling unit 202a.

The control unit TCU receives the battery BT2 temperature Tx4 from the temperature detector unit T2 (step ST41). In the comparison unit 20, it compares this temperature with the heating threshold temperature Tb (step ST48). and if it determines Tx4 < Tb, it controls the polarity of the thermoelectric element 3 (2) so that the contact surface between the heat conduction member 2 2) and the thermoelectric element 3 (2) becomes the heating surface, thereby performing adjustment on the electric current (Step ST49). Furthermore, the pumping device 6 is operated at high speed, the control valve SV2 is fully opened to allow water flow, the switching control valve RV is switched to the heating flow path 7b, the PTC heater in the heating unit 202b is run to heat the heat transfer medium 10, and the non-contact surface of the thermoelectric element 3 (2) is heated in the heat exchange unit 5 (2) (Step ST50). Then, while detecting the temperature Tx4 of battery BT2, the temperature Ty1 near one end A of heat conduction member 2 (2), and the temperature Tz1 near the other end B, the comparison unit 20 compares Tx4 with Tb (Step ST51). Steps ST49 to ST51 are repeated. Eventually, when temperature Tx4 exceeds Tb and the relationship Tb < Tx4 < Ta is satisfied, the electric current to thermoelectric element 3(2) is stopped (Step ST52). controls control valve SV2 to allow low-volume water flow, slows or stops the pumping device 6, switches switching control valve RV to cooling flow path 7a, and stops the PTC heater functioning as heating unit 202b (Step ST53). Similar to the cooling operation, the heating operation for the non-contact surface in step ST53 may be performed as needed. In that case, a temperature detector unit T may be provided for the non-contact surface, and whether to execute step ST50 may be determined based on the obtained temperature. Furthermore, whether to switch the switching control valve RV to the cooling flow path 7a when stopping the heating unit 202b is optional.

According to the battery temperature adjustment system configured as described above, even when cooling or heating requirements for multiple batteries change due to different usage conditions, it is possible to provide a battery cooling and heating device capable of individually performing temperature adjustment through cooling and heating.

The above describes embodiments of the battery temperature adjustment system, but the present invention is not limited to this embodiment. The order of judgment against the threshold may differ. Furthermore, although inequality symbols such as "<" and ">" are used in the FIG. symbols, "≤" and "≥" may also be used. Multiple conditions may also be combined.

### EXPLANATION OF SYMBOLS

- SYS, SYS (1) to (4): Battery cooling and heating device
- BT: Battery
- T: Temperature Detection unit
- 2: Heat Conduction member
- 3: Thermoelectric Element
- 5: Heat Exchange unit
- 6: Pumping device
- 7: Circulation Flow path
- 8: Branch Flow path
- 9: Storage unit
- TCU: Control unit
- ECU: Electronic Control unit
- 202: Heat Supply device
- SV: Control Valve
- RV: Switching Control valve
- La to Lc, L1 to L5: Signal Lines

## Claims

1. A battery cooling and heating device comprising:
a battery;
a heat conduction member connected to one end of the battery for performing heat exchange;
a thermoelectric element connected to the other end of the heat conduction member for performing heat exchange;
a temperature detector unit configured to detect at least a temperature of the battery; and
a control unit configured to switch an amount and polarity of an electric current flowing to at least the thermoelectric element according to a temperature detected by the temperature detector unit,
wherein the thermoelectric element configured, when current flows through it, forming a heating surface with a higher temperature and a cooling surface with a lower temperature than the heating surface, thereby performing battery cooling and heating.

2. The battery cooling and heating device according to claim 1, comprising:
a plurality of the batteries;
a plurality of the heat conduction members, each connected to one of the plurality of batteries;
a plurality of the thermoelectric elements, each connected to one of the plurality of the heat conduction members; and
a plurality of the temperature detector units, each configured to detect a temperature of at least one of the plurality of batteries,
wherein the control unit is configured to control a cooling and heating of the plurality of batteries.

3. A battery cooling and heating device comprising:
a battery;
a heat conduction member connected to one end of the battery and capable of performing heat exchange;
a thermoelectric element connected to the other end of the heat conduction member and performing heat exchange;
a temperature detector unit configured to detect at least a temperature of the battery;
a heat exchange unit connected to the thermoelectric element for heat exchange;
a heat transfer medium, which is a fluid for transporting heat;
a circulation flow path, wherein the heat transfer medium circulates and
configured to enable heat exchange between the heat exchange unit and the heat transfer medium;
a pumping device configured to pump the heat transfer medium through the circulation flow path;
a heat supply device configured to heat or cool the heat transfer medium; and
a control unit configured to control at least an amount of an electric current flowing to the thermoelectric element, a polarity of the electric current, the pumping device, and the heat supply device, based on a temperature detected by the temperature detector unit,
wherein the control unit is configured to perform control to minimize a temperature difference generated between a surface where the thermoelectric element and the heat conduction member are connected and a surface where the heat exchange unit and the thermoelectric element are connected, while electric current flows through the thermoelectric element, thereby performing cooling or heating.

4. The battery cooling and heating device according to claim 3, comprising:
a plurality of the batteries;
heat conduction members connected to each of the plurality of batteries;
a plurality of thermoelectric elements connected to the heat conduction members;
a plurality of heat exchange units connected to the plurality of thermoelectric elements;
a plurality of temperature detector units configured to detect temperatures of at least the plurality of batteries respectively;
a plurality of branch flow paths configured to branch off in parallel from the circulation flow path and rejoining the circulation flow path; and
a plurality of control valves configured to be capable of making adjustment to a flow rate of the heat transfer medium in each of the plurality of branch flow paths,
wherein, in the plurality of branch flow paths, each of the plurality of heat exchange units and the heat transfer medium passing through the plurality of branch flow paths are configured to be able to perform heat exchange, and
wherein the control unit is configured to control the plurality of control valves.

5. The battery cooling and heating device according to claim 4, wherein
the heat supply device comprising:
a cooling unit configured to cool the heat transfer medium;
a heating unit configured to heat the heat transfer medium,
a cooling flow path including the cooling unit that branches off from the circulation flow path and rejoins it;
a heating flow path including the heating unit; and
a switching control valve that switches either the cooling flow path or the heating flow path,
wherein the control unit is configured to control the switching control valve.
